# EUROPEAN PATENT SPECIFICATION

(11) **EP 2 708 011 B1**
(45) Date of publication and mention of the grant of the patent: **13.11.2019**
(21) Application number: 12745644.0
(22) Date of filing: 07.05.2012
(51) Int. Cl.: H04L 29/08

(54) **SYSTEM AND METHOD FOR CONTENT DISTRIBUTION INTERNETWORKING**
SYSTEM UND VERFAHREN ZUR NETZWERKZUSAMMENARBEIT BEI EINER INHALTSVERTEILUNG
SYSTÈME ET PROCÉDÉ D'INTERCONNEXION DE RÉSEAUX DE DISTRIBUTION DE CONTENUS

(30) Priority: 12.05.2011 ES 201130756 P
(43) Date of publication of application: 19.03.2014
(73) Proprietor: Telefonica S.A., 28013 Madrid (ES)
(72) Inventor: RODRIGUEZ RODRIGUEZ, Pablo, E-28013 Madrid (ES); GARCÍA MENDOZA, Armando Antonio, E-28013 Madrid (ES); CHHABRA, Parminder, E-28013 Madrid (ES); YANG, Xiaoyuan, E-28013 Madrid (ES)
(74) Representative: Carlos Hernando, Borja
(86) International application number: PCT/EP2012/058350
(87) International publication number: WO 2012/152743

(56) References cited:
- US-A1- 2011 078 327

## Description

### Field of the art

The present invention generally relates, in a first aspect, to a system for Content Distribution Internetworking, and more particularly to a system comprising a global origin server that coordinates the formation of a global network by connecting to local origin servers of a plurality of Content Delivery Networks, or CDNs.

A second aspect of the invention relates to a method comprising using a global origin server for coordinating the formation of a global network by its connection to CDN local origin servers.

### Prior State of the Art

The terminology and definitions that might be useful to understand the present invention are included.

PoP: A point-of-presence is an artificial demarcation or interface point between two communication entities. It is an access point to the Internet that houses servers, switches, routers and call aggregators. ISPs typically have multiple PoPs.

Content Delivery Network (CDN): This refers to a system of nodes (or computers) that contain copies of customer content that is stored and placed at various points in a network (or public Internet). When content is replicated at various points in the network, bandwidth is better utilized throughout the network and users have faster access times to content. This way, the origin server that holds the original copy of the content is not a bottleneck.

ISP DNS Resolver: Residential users connect to an ISP. Any request to resolve an address is sent to a DNS resolver maintained by the ISP. The ISP DNS resolver will send the DNS request to one or more DNS servers within the ISP's administrative domain.

URL: Simply put, Uniform Resource Locator (URL) is the address of a web page on the world-wide web. No two URLs are unique. If they are identical, they point to the same resource.

URL (or HTTP) Redirection: URL redirection is also known as URL forwarding. A page may need redirection if (1) its domain name changed, (2) creating meaningful aliases for long or frequently changing URLs (3) spell errors from the user when typing a domain name (4) manipulating visitors etc. For the purpose of the present invention, a typical redirection service is one that redirects users to the desired content. A redirection link can be used as a permanent address for content that frequently changes hosts (much like DNS).

Bucket: A bucket is a logical container for a customer that holds the CDN customer's content. A bucket either makes a link between origin server URL and CDN URL or it may contain the content itself (that is uploaded into the bucket at the entry point). An end point will replicate files from the origin server to files in the bucket. Each file in a bucket may be mapped to exactly one file in the origin server. A bucket has several attributes associated with it - time from and time until the content is valid, geo-blocking of content, etc. Mechanisms are also in place to ensure that new versions of the content at the origin server get pushed to the bucket at the end points and old versions are removed.

A customer may have as many buckets as she wants. A bucket is really a directory that contains content files. A bucket may contain sub-directories and content files within each of those sub-directories.

Geo-location: It is the identification of real-world geographic location of an Internet connected device. The device may be a computer, mobile device or an appliance that allows for connection to the Internet for an end user. The IP-address geo-location data can include information such as country, region, city, zip code, latitude / longitude of a user.

Operating Business (OB): An OB is an arbitrary geographic area in which the provider of the CDN service is installed. An OB may operate in more than one region. A region is an arbitrary geographic area and may represent a country, or part of a country or even a set of countries. An OB may consist of more than one region. An OB may be composed of one or more ISPs. Each region in an OB is composed of exactly one region DNS server and tracker. An OB has exactly one instance of Topology Server.

Partition ID: It is a global mapping of IP address prefixes into integers. This is a one-to-one mapping. So, no two OBs can have the same PID in its domain.

Default Operating Business: OB₀ is defined as a default operating business where the TLD DNS server resides. All IP prefixes that are not part of other regions default to this region. By design, the default OB₀ is designed to have just one region that may be used to serve content to such IP prefixes (that are not part of any other OB).

Consistent Hashing: This method provides hash-table functionality in such a way that adding or removing a slot does not significantly alter the mapping of keys to slots. Consistent hashing is a way of distributing requests among a large and changing population of web servers. The addition of removal of a web server does not significantly alter the load on the other servers.

Overlay Network: An overlay network is a computer network that is built on top of another network. Nodes in an overlay network are connected by virtual / logical links. Each logical link may consist of a path that is made up of multiple physical links in the underlying network.

Content Distribution Internetworking (CDI): Content Distribution Internetworking is the ability to connect many independently administered CDNs to form a federation of CDNs. This allows a CDN to extend beyond its administrative domain to increase the reach of content.

Transport Control Protocol (TCP): Transport Control Protocol is one of the core protocols of the Internet Protocols. TCP is responsible of an ordered and reliable delivery of data stream between two network hosts.

Next, each component of the CDN service provider's sub-system is described. The infrastructure consists of Origin Servers, Trackers, End Points and Entry Point.
- Publishing Point: Any CDN customer may interact with the CDN service provider's infrastructure solely via the publishing point (sometimes also referred to as the entry point for simplicity). The publishing point runs a web services interface with users of registered accounts to create / delete and update buckets.

A CDN customer has two options for uploading content. The customer can either upload files into the bucket or give URLs of the content files that reside at the CDN customer's website. Once content is downloaded by the CDN infrastructure, the files are moved to another directory for post-processing. The post-processing steps involve checking the files for consistency and any errors. Only then is the downloaded file moved to the origin server. The origin server contains the master copy of the data.
- End Point: An end point is the entity that manages communication between end users and the CDN infrastructure. It is essentially a custom HTTP server.

In addition, the end points maintain a geo-IP database and table of a list of datacenters.
- Tracker: The tracker is the key entity that enables intelligence and coordination of the CDN service provider's infrastructure. In order to do this, a tracker maintains (1) detailed information about content at each end point and (2) collects resource usage statistics periodically from each end point. It maintains information like number of outbound bytes, number of inbound bytes, number of active connections for each bucket, size of content being served, etc.

When an end user makes a request for content, the tracker uses the statistical information at its disposal to determine if (1) the content can be served to the requesting end user and if so, (2) determines the closest end point and one with the least load to serve an end user. Thus, the tracker acts as a load-balancer for the CDN infrastructure.
- Origin Server: This is the server(s) in CDN service provider's infrastructure that contains the master copy of the data. Any end point that does not have a copy of the data can request it from the origin server. The CDN customer does not have access to the origin server. CDN service provider's infrastructure moves data from the publishing point to the origin server after performing sanity-checks on the downloaded data.

CDNs typically operate as single global entities; have multiple points of presence and in locations that are geographically far apart. As a result, a CDN may have multiple replicas of each piece of content being hosted. The definition of origin servers for CDN providers is generalised as follows: (1) an entity (like a server) that resides in the administrative domain of CDN customer. Content is replicated at end point(s) after the first request for content by an end user. (2) All origin servers are under the administrative control of the same CDN provider and contain content from CDN customers. These servers contain the master copy of the content and replicate it at the end point(s). Adding additional storage capacity at the CDN service provider is merely a case of adding additional origin servers under its administrative control.

There are many different designs of CDNs. For example, [2] uses a hierarchy of DNS [1] servers together with geo-location information to find a content server that is closest to a requesting end user to serve content. Other solutions like [3] rely on a small number of large datacenters or [6] a large number of small datacenters connected by a well-provisioned private network to first identify a datacenter that is closest to the requesting end user. Once the datacenter is identified, an end point in the datacenter is identified to deliver the content. Only at this final step the CDN connects to the public Internet. Further, [5] relies on extensive storage and caching infrastructure at the major peering points. Amazon [4] provides CDN service using Amazon Cloudfront together with its simple storage service allowing end users to get data from various edge locations of the Internet that Amazon peers with. Of these, only [2] connects to the public Internet and provides a global CDN service and falls under a single administrative domain. The other CDN designs fall under different administrative domains.

Regardless of administrative control, content originally stored in origin servers is replicated at end points for distribution to requesting end users. The origin servers in the CDN service provider always contain the master copy of the content obtained from a CDN customer. The CDN service is designed to work as a global CDN.

There are several reasons why a number of OBs may want to remain and operate independently and yet come together to form a global CDN.

Each OB may be an independent operating business in one country and hence, may want complete control over all of the infrastructure elements of the CDN. The OBs may yet be a part of a single global entity.

Given that an OB operates in one country, it is easier for an OB to establish a deep relationship with the content providers in that country and operate within its laws.

By allowing the content providers in the OB deciding if their content is visible only within that OB or may be shown in other OBs (or even globally), the OBs can give to content providers all the control over their content they desire.

An OB may not want to expose the detailed topological information about its network to other OBs and yet be part of the global CDN to share content and expand content reach.

The presence of several CDNs, each operating its own naming convention (i.e., having its own CDN URLs) and its own DNS infrastructure to identify the requested content, makes it impossible to extend the scale and reach of CDNs. Several proposals under Content Delivery Internetworking (CDI) have been proposed with a goal of peering CDNs. The key goals of peering CDNs are (a) increase capacity, (b) improve delivery points in the network, (c) expand reach of content to a wider customer base, (d) provide better fault-tolerance and (e) achieve better economies of scale and (f) a better overall user experience.

In [8] the authors introduce definitions for Content Distribution Internetworking (CDI) or CDN peering and define the terminology. They envision Content Internetworking as consisting of Accounting Internetworking, Content Internetworking Gateways, Request-Routing Internetworking. The authors discuss many known request-routing mechanisms in [9]. They discuss DNS based request-routing schemes including multi-level resolution, anycast and object encoding in DNS. In addition, they discuss Transport and Application layer request-routing schemes including URL rewriting and HTTP redirection. In [10], the authors present various Content Internetworking scenarios. They propose content internetworking gateways to route requests for content and accounting under a variety of scenarios, with particular emphasis on accounting internetworking.

A technique called CDN brokering is defined by the Content Alliance. Here, CDN brokering is the ability of a CDN to redirect clients dynamically between two or more CDNs. One such realization is the DNS-based system, Intelligent Domain Name Server (IDNS). The IDNS [7] is a DNS broker that uses a probability distribution in the region in which the CDNs operates to determine which CDN will serve the request. However, this requires that CDNs hold the content names and end points from which they are served in caches. Content names are identified from the HTTP request of the headers. While this works for HTTP downloads, it cannot work for live streaming of content.

A related patent using this technique is US 2011078327 (A1) which relates also to content delivery using multiple CDNs, in this case the selection of one CDN among multiple CDNs is done at a DNS domain level. The content delivery includes receiving a Domain Name Service (DNS) request, selecting from a plurality of Content Delivery Networks (CDNs) a CDN to provide content associated with the DNS request, processing the DNS request and generating a response, the response including a canonical name (CNAME) value that corresponds to the selected CDN, receiving an indication that the content is not presently available at the selected CDN, and returning an Internet Protocol (IP) address of a data source that is configured to provide the content to the selected CDN.

Most proposals under CDI are very broad and offer only guidelines and little by way of concrete protocols for implementation. Some problems have been detected with the existing proposals:
- Some large CDN service providers may choose to white-label their CDNs. In this case, the white-labelled CDN and the origin CDN provider really run two CDNs under two different administrative controls. They cannot combine to form a seamless single CDN for a key reason: The URLs of content for the white-labelled CDN are different from that of the large CDN provider. In order to form a seamless global network, both the CDNs will have to understand and rewrite one another's URLs, a huge task.
- The use of anycast has its drawbacks since the DNS server may not be the closest in routing to the client and server load is not considered during request routing.
- DNS only resolves requests at the domain level. While an ideal request resolution should service requests at the object level, this is hard to do especially when resolving objects across CDNs.
- Having a hierarchy of DNS domains may also involve both complexity and incompatibility since some regions may not support more than one level hierarchy.
- Use of DNS together with redirectors is especially complex across CDNs since such a system would also have to implement URL translations between CDNs.
- Development of brokering systems for request routing and content forwarding will require writing a new set of protocols between CDNs. Such systems are hard to implement as evidenced by lack of concrete working solutions. On the other hand, it is not hard to implement systems that merely exchange traffic accounting information.
- While [10] presents a variety of scenarios under which two CDNs can route requests via Content Internetworking Gateways, there is no description of the design of such gateways and how the two CDNs should implement such protocols.

Overall, the standardization efforts in CDI are poor with little or no activity for better part of a decade.

### Notation Used

Here, we describe the notation that is used in the rest of the invention:
OBᵢ: Any arbitrary operating business i may be denoted by OBᵢ. Similarly, we have denote OBₖ, OBₗ, OBₘ for operating businesses k, I and m. Here, i, k, I, m etc. are all integers.
OSᵢ: Any arbitrary operating business i (OBᵢ) has an origin server denoted by OSᵢ.
OB₀: This is used to denote the default operating business 0.
OS_{G}: This is used to denote the global origin server.
OS_{{j}} : This is used to denote a list of origin servers that may contain a requested content. If origin servers at j, k, l and m contain the requested content, OS_{{j}} = (OSⱼ, OSₖ, OSₗ, OSₘ). Here, {j} = (j, k, l, m).

### Description of the Invention

It is necessary to provide an alternative to the state of the art, which covers the gaps found therein, particularly those related to the above indicated problems related to the known CDI proposals.

To that end, the present invention concerns, in a first aspect, to a system for Content Distribution Internetworking, or CDI, comprising a plurality of Content Delivery Networks, or CDN, each defining an operating business having its respective local origin server, and computing means for performing the interconnection of said plurality of CDNs.

Different from other known CDI proposals, in the one provided by the system of the first aspect of the invention, said computing means comprise a global origin server that coordinates the formation of a global network by connecting to some (or all) of said local origin servers at the OBs.

By the system of the invention, a CDI can run on a single hierarchy of DNS servers and may combine an arbitrary number of CDNs while connecting to the public Internet.

A second aspect of the invention provides a method for Content Distribution Internetworking. The method comprises performing the interconnection to a plurality of CDNs, each defining an operating business with its own local origin server.

Different from other known methods, the CDI provided by the second aspect of the invention comprises, using a global origin server for coordinating the formation of a global network by connecting said global origin server to some (or all) of said local origin servers.

The embodiments described for the system of the first aspect of the invention are also valid for the method of the second aspect, as for the functions the different elements of the system perform.

### Brief Description of the Drawings

The previous and other advantages and features will be more fully understood from the following detailed description of embodiments, with reference to the attached drawings, which must be considered in an illustrative and non-limiting manner, in which:
Figure 1 shows the system of the first aspect of the invention for an embodiment for which it comprises three separate operating OBs with their own publishing point, tracker, a DNS server authoritative for the only region in the OBs, an origin server and end points. The three OBs form a global CDN with the aid of a Global Origin Server. A TLD DNS server is the nameserver for t-cdn.net.
Figure 2 shows an embodiment of the method of the second aspect of the invention, in the form of a synchronization algorithm to get the content using the OS_{G}.
Figure 3 shows the sequence diagram for communication between an OB and OS_{G} in locating the requested content from another OB, for an embodiment of the method of the second aspect of the invention.
Figure 4 shows another embodiment of the method of the second aspect of the invention, in the form of a sequence diagram when an origin server from a new OB, comes online and regular updates between OSᵢ and OS_{G} are carried out.

### Detailed Description of Several Embodiments

Next, a description of the invention for several embodiments will be done, referring to both, the system and the method of the invention.

This invention shows how to combine many independently operating but similar CDNs to come together to seamlessly form a global CDN network. As part of this, the traditional role of an origin server from a stand-alone entity in a CDN that sends content to an end point for further distribution is extended to one that is content aware. In a global CDN network that consists of a collection of Operating Businesses (OBs), each OB has its own CDN infrastructure, so the origin servers from all the OBs form an overlay network of origin servers that share content for replication at end points. Only the end points within OBs are responsible of distributing content to requesting end users.

The key to the CDI architecture is (i) the presence of a global origin server, OS_{G}. This OS_{G} maintains the meta-data of all the buckets that are in each OS of all the OBs in the CDNs. (ii) All the OSs and the OS_{G} come together to form a global overlay of origin servers.

If the requested content is not in the OSᵢ of the requesting CDN i, the location of the content is determined from OS_{G}. Subsequently, OSᵢ downloads the content from the set of origin servers OS_{{j}} of the CDNs {j, |j| ≥ 1} in which the content exists. The OSᵢ then serves the content to the requesting end user.

Thus, all the CDNs that operate in independent administrative domains come together to form a seamless global CDN.

Next, the details of the architecture of the system of the invention, for internetworking independently operating CDNs to come together to form a seamless global CDN will be presented.

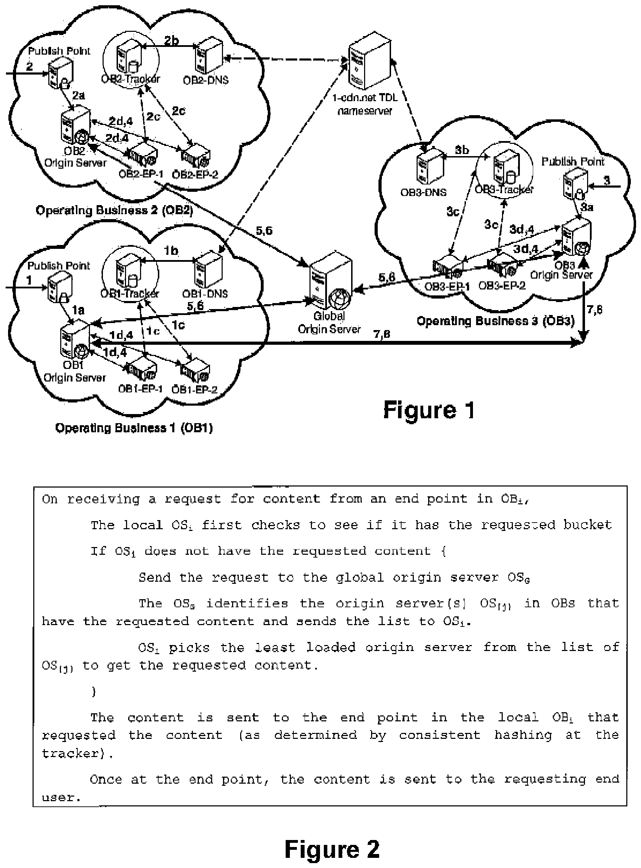

As seen from Figure 1, each OBᵢ has its own DNS, tracker, publishing point, origin server and end points. Each of these individual entities is under the administrative and physical control of an OB.

Each OBᵢ has a publishing point that the CDN customers within the OBᵢ can use to publish their content on the CDN. The customers may use two techniques to upload their content to the CDN. (1) upload content into their buckets at the publishing point or (2) provide the publishing point with the address of the web-server to download content. After post-processing, the customer bucket with content is available at the origin server where it is ready to be served to the end points. At the bucket and file level, the customer may determine the geographic region where the content may be shown. The geographic region is mapped to OBs.

In addition to an Origin Server at each OB, there is also a global origin server OS_{G}. The global origin server keeps an open TCP connection with each of the OSs in the other OBs.

There is a single top-level domain (TLD) server for the domain t-cdn.net. The DNS at each OB resolves all the IP addresses in the second-level domain for the OB (it is the authoritative server in the DNS sub-zone of the OB).

The CDN service provider consists of independent Operating Businesses (OBs) that all together form a global CDN. A few key aspects of the global CDN are:
- Each OB owns the infrastructure and operates its own local CDN. Yet, the OBs are part of a global CDN network infrastructure.
- In addition, centralized functions need to be performed across all the OBs.
The infrastructure for supporting these functions may reside in any OB. These centralized functions are (a) deploying the DNS server to resolve the top-level domain (TLD) for t-cdn.net. (b) Deploying a global origin server (OS_{G}) that communicates with each of the origin servers across all the OBs.
- The OB that hosts the TLD DNS and the OS_{G} has been designated as OB₀. OB₀ may also own its own CDN infrastructure like any other OB. However, there is no preferential treatment for OB₀. OB₀ is just a peer to OB₁ and OB₂ just as OB₁ is a peer to OB₂ (OB₀ is merely used for convenience). All OBs are peers and are treated equally.

The tracker at each OBᵢ maintains a consistent hash ring for all content that resides in the OBᵢ's infrastructure.

Building a seamless global CDN out of a set of individual CDNs with their individual administrative domains consists of two main steps: In the first step the DNS resolution is done to identify an end point that will serve content to the requesting end user. In the second step, the end point will get the content from the network of origin servers and serve content. Next, the DNS resolution will be discussed:
When an end user, say in OBᵢ requests content b87.t-cdn.net/87/video01.flv, the ISP DNS resolver first resolves the TLD t-cdn.net. The TLD DNS server resolves the subzone of OBᵢ using its geo-IP database. The ISP DNS resolver then queries the authoritative DNS sever at OBᵢ that forwards the request to an end point in OBᵢ.

The end point first checks to see if the requested bucket and content is part of OSᵢ. If it is not, the end point checks with the origin server if the content is part of OS_{G}. If it is not part of OS_{G} either, an error is returned to the end user. If the content is either in OSᵢ or OS_{G}, the end point determines the closest datacenter to the requesting user's ISP DNS (called a partition ID, in this case, say 34). The end point also calculates the consistent hash of the requested URL and returns HTTP 302, moved location b87-p34-abf8.t-cdn.net to the end user. The end user now sends an address resolution request for b87-p34-abf8.t-cdn.net to the OBᵢ DNS server. Next, the DNS server forwards the request to the tracker serving the OBᵢ. The tracker performs a consistent hash of the received URL and identifies the end point that should serve the requested content.

Fig. 1 shows the publishing point for each OB. Once the request for content of the form b87-p34-abf8.t-cdn.net comes to the DNS server authoritative in the OB, the request is forwarded to the appropriate end point (labels b and c).

If the OSᵢ in OBᵢ has the requested content, it is downloaded to the end point that serves the content to the end user (label d in Fig. 1). On the other hand, if the content is not in OSᵢ, as a second step, the network of origin servers will serve the content as follows:
A logical network of origin servers (OS) is build with the global origin server (OS_{G}) as the head. The global origin server, OS_{G} keeps an open connection with the origin servers across all the OBs. It uses this open connection to synchronize buckets with the origin servers across all the OBs.

As shown In Figure 1, if the content is not available in the local OB (label 4), the OS₁ at OB₁ forwards the request to OB_{G} (label 5). OB_{G} responds with address of OS₃ of OB₃ as one having the requested content (label 6). OS₁ connects to OS₃ to get the content (labels 7 and 8). The content is then forwarded to the appropriate end point in OB₁ for delivery to the end user.

Figure 2 describes a synchronization algorithm to get the content using the global origin server OS_{G}. The OS_{G} maintains an open connection with each of the origin servers in all the OBs. Periodically (every 2 minutes), each OS forwards meta-data for the buckets and files in each bucket to the OS_{G}. Once each OS across all the OBs has forwarded its initial set of buckets and files to the OS_{G}, the subsequent communication with OS_{G} only sends updates of files / buckets. This reduces network overhead at the OS_{G} in the presence of many OBs.

The OS_{G} may receive content from the origin servers in other OBs by one of the following methods: (1) The OS_{G} picks one of the origin servers in the other OBs that has the content, and forwards its address to the OS of the requesting OB. The OS of the requesting OB downloads the content and forwards it to the requesting end user. (2) OS_{G} forwards a list of OS servers in all the OBs that have the requested content. The requesting OS may use (a) a P2P protocol to download the content from OSs of OBs that have the content and forward the content to the requesting end user or (b) get it from the one of the origin servers among the list returned by OSⱼ.

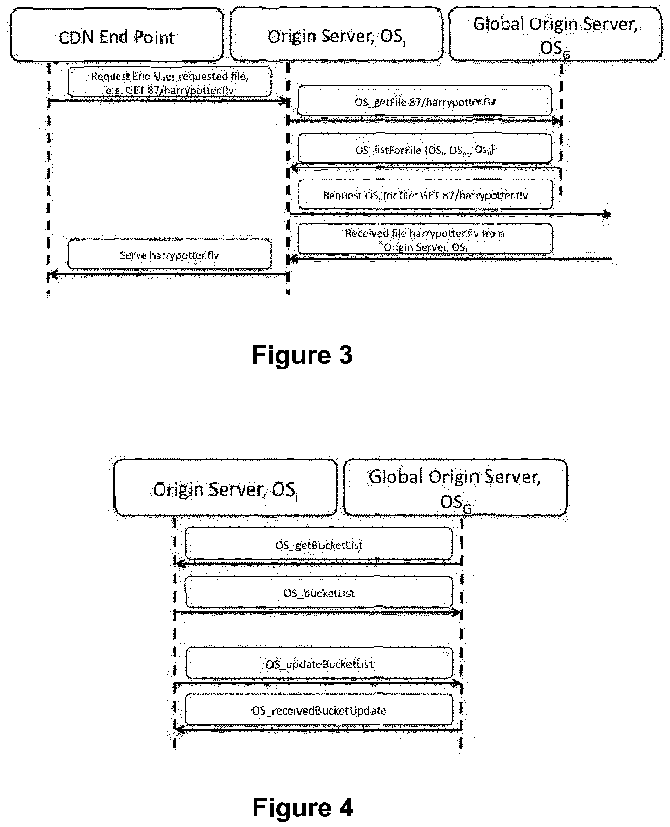

In Fig 3, the end point gets a request for a file harrypotter.flv in bucket 87 from an end user in OBᵢ. The OSᵢ in OBᵢ sends an OS_getFile request to OS_{G} to determine the OS that contain the file. The OS_{G} returns an ordered list {OSₗ, OSₘ, OSₙ} to the origin server OSᵢ. The OSᵢ gets the file from the OSₗ. Once OSᵢ downloads the file from OSₗ, it sends the file to the requesting end point in OSᵢ. The end point in turn serves the requesting end user in OBᵢ.

### Design of Global Origin Server OS_{G}:

Next the OS_{G} design for an embodiment of the system of the first aspect of the invention is discussed. The local origin server OSᵢ at each OBᵢ in CDN service provider's infrastructure contains a master copy of the data uploaded by all the CDN customers in that OB. The OS_{G} on the other hand does not contain a master copy of any data. It is the entity that coordinates the formation of a global CDN by connecting all of the disjoint OSᵢ.

Any end point that does not have a copy of the data can request it from the origin server. A CDN customer does not have access to the origin server. The CDN service provider's infrastructure moves content from the entry point to the origin server after performing sanity-checks on the downloaded data.

In all, seven messages that must be supported are defined as part of the wire protocol (this is oblivious to whether HTTP or message passing protocol is used). The OS_{G} supports the following messages:
(1) Get bucket list (OS_getBucketList). This message is sent by the OS_{G} when a TCP connection is first established between OSᵢ and OS_{G}.
(2) Received bucket update (OS_receivedBucketUpdate). This message is sent to the OSᵢ that sent the updated bucket and file list.
(3) Origin Server List for requested file (OS_IistForFile). This message is sent to OSᵢ that requested the file in response to OS_getFile message.
(4) Abort connection (OS_connectionAbort). The OS_{G} may abort connections with any (or all) OSᵢ if the server needs to undergo maintenance or it detects that it has not received any update. This will force the OSᵢ to open a new connection.

The OS_{G} has three modules: connection module, neighbourhood module and a buckets module. We describe the function of each of the modules below.
- Connection Module: The connection module has a connection manager that is responsible of maintaining the connection with each of the OSᵢ that are part of the global CDN infrastructure. This module is also responsible for processing a received message and sending messages to the OSᵢ in other OBs.
- Neighbourhood Module: The neighbourhood module has a neighbourhood manager that knows about each of the OSᵢ that is part of the global CDN. The neighbourhood manager also processes the statistics information received from each of the OSᵢ. Thus, it knows which of the origin servers is relatively less loaded. If more than one OS has the requested content, the least busy OSⱼ is chosen to serve the content to OSᵢ.
- Bucket Module: The bucket module has a bucket manager at OS_{G} who gets a list of all buckets (and files from the buckets) from each of the OSᵢ. Thus, the bucket manager knows all the OSᵢ that have a requested file.

When a request for content comes to OS_{G}, the connection manager receives the request. The bucket manager identifies the OS_{{i}} that have the requested file. The neighbourhood manager ranks the OS_{{i}} in order from least loaded to the most loaded origin servers. The list is then sent to the requesting OSᵢ by the connection module.

### Design of OS at the OBs:

The OSᵢ at an OBᵢ still stores a master copy of all the content at OBᵢ. In addition, to get content from other OSs, it needs to support the following messages on a wire protocol:
(5) Bucket list (OS_bucketList). This message, along with a list of buckets (and files in the buckets) is sent to the OS_{G} in response to OS_getBucketList.
(6) Update bucket list (OS_updateBucketList). This message is sent to the OS_{G} along with a list of updates to the files and buckets since the last update. Statistics related to the OSᵢ are piggybacked to the bucket updates sent to the OS_{G}.
(7) Get file (OS_getFile). An OSᵢ gets a list of IP addresses for the requested content. It gets the IP addresses in order of the least busy Origin Server, OSⱼ first. The OSᵢ then connects to OSⱼ and gets the requested content.

Each of the OSᵢ implements three modules, a connection module, a statistics module and a bucket module.
- Connection module: The connection module has a connection manager who manages the connection between the local origin server and OS_{G}. If the local OS (OSᵢ) closes the connection (for any reason) with the OS_{G}, the connection manager is responsible for re-establishing the connection with the OS_{G}. The connections manager at the OSᵢ is responsible of sending messages to and processing received messages from OS_{G}.
- Statistics module: The statistics module maintains system level statistics (CPU consumed, inbound and outbound bytes) between two reporting periods at the OSᵢ.
- Bucket module: This module has a bucket manager, which keeps a list of all buckets and files in each of the buckets. The bucket manager also sends updates to buckets between two reporting periods to the OS_{G}.

End User is not in any OB:
If a requesting end user is not in any of the administrative domains of the OBs and if the requested content may be shown in the geography of the end user, the request for content is forwarded to the closest OB_{I}. The tracker at OB_{I} then determines the end point in the OB_{I} that may be best suited to download content to the requesting end user.
If an end point in OB_{I} that is assigned by the tracker to serve the requesting end user does not have the requested content, the OS_{I} first gets the address of the OS_{{j}} from OS_{G} that have the requested content. Subsequently, the OS_{I} downloads the content and sends it to the assigned end point in the same OB_{I} that will serve the content to the end user.

When a new OB comes online:
When a new OB (call it OBₙ) comes online, the OSₙ at OBₙ does the following:
As part of its initialization, the OSₙ is assigned the IP address of the Global origin server, OS_{G}. When the origin server OSₙ comes up, it opens a TCP connection with the OS_{G}.

The global origin server OS_{G} receives the following information from each of the OSᵢ for all OBᵢ that come together to form a global inter-distribution network. Periodically, each of the OSᵢ reports the number of outbound bytes, number of inbound bytes, number of active connections and CPU utilization. The OS_{G} uses this information to infer the load at the OS. The OSᵢ send this information with updates to buckets and files in each bucket.

The sequence diagram in Fig. 4 describes the communication between OSᵢ and OS_{G} when OSᵢ comes online:
When an OB comes online (say OBᵢ) the OSᵢ in the OBᵢ establishes a TCP connection with OS_{G}. Next, OS_{G} sends an OS_getBucketList message to the OBᵢ. In response, the OSᵢ sends a list of all buckets and files in each of the buckets to OS_{G}. Following the initial message exchange, the OSᵢ updates the OS_{G} with changes in file / bucket list every couple of minutes via the OS_updateBucketList. This message also contains the statistics information at the OSᵢ. In response, the OS_{G} acknowledges the receipt of the information from OBᵢ via an OS_receivedBucketUpdate response.

### When an OB fails:

When an OB fails (the connection between OSᵢ and OS_{G} goes down), the bucket manager at OS_{G} removes all buckets and files associated with OSᵢ. The neighbourhood manager at OS_{G} removes OSᵢ from its list of neighbours and all buckets associated with OSᵢ. When an OSᵢ in OBᵢ comes online, it attempts to open a connection with OS_{G}.

Typically, OS_{G} is mirrored for redundancy. However, if OS_{G} must go down for maintenance (or for any other unexpected reason) and comes back up, it starts the interconnection between the disjoint CDNs. Once each of the OSᵢ connects with the OS_{G}, they respond to the OS_getBucketList request with a list of buckets and files in the buckets. Subsequently, each of the OSᵢ periodically send the updates to files and buckets to the OS_{G}.

### Key Functions of the Global Origin Server:

The global origin server OS_{G} has the following functionalities:
- The OS_{G} helps each of the OSᵢ form a network of origin servers.
- Periodically, the OS_{G} communicates with each of origin servers OSᵢ
   1. It gets a list of buckets and files in the buckets from each of the OSᵢ.
   2. It gets updates to any of the files / buckets in each of the OSᵢ.
   3. It gets statistical info on the status of each of the OSᵢ. This allows OS_{G} to infer which OSₖ is best able to serve content request for OSⱼ.

Thus, the OS_{G} knows the location of every piece of content in each OB.

When an OSᵢ in an OBᵢ looks for a piece of content, it gets an ordered list of OB_{{i}} from whom it can request the content.

### Advantages of the Invention:

The key advantages of this invention are:
- Allows OBs in distinct administrative domains to come together to form a seamless global CDN network.
- Decouple content identification and forwarding from DNS to Origin Servers across different OBs. Content routing done at the OS of the serving OB is at the transport level.
- Avoids complexity of content peering between CDNs. It does this by using a global origin server OS_{G} that has the global view of all the content is the origin severs across all the OBs.
- The end points, when requesting content, connect to a network of overlay origin severs. In reality, they receive content only from the local origin server of the OB. So, end points don't need to know or resolve addresses from other OBs.
- The method ensures low communication overhead across the network of OSs by passing only the updates between individual OS and OS_{G} rather than send the entire list of buckets each time.

A person skilled in the art could introduce changes and modifications in the embodiments described without departing from the scope of the invention as it is defined in the attached claims.

### ACRONYMS AND ABBREVIATIONS

- ADSL: ASYMMETRIC DIGITAL SUBSCRIBER LINE
- CDN: CONTENT DISTRIBUTION NETWORK
- DNS: DOMAIN NAME SERVICE
- POP: POINT OF PRESENCE
- TLD: TOP LEVEL DOMAIN
- FTP: FILE TRANSFER PROTOCOL
- HTTP: HYPERTEXT TRANSFER PROTOCOL
- MD5: MESSAGE-DIGEST ALGORITHM 5
- URL: UNIFORM RESOURCE LOCATOR
- ISP: INTERNET SERVICE PROVIDER
- TTL: TIME TO LIVE
- OB: OPERATING BUSINESS
- CDI: CONTENT DISTRIBUTION INTERNETWORKING
- TCP: TRANSPORT CONTROL PROTOCOL

### REFERENCES

[1] Domain Name System definition. http://en.wikipedia.org/wiki/Domain_Name_System
[2] Akamai. http://www.akamai.com
[3] Limelight Networks, http://www.limelightnetworks.com/
[4] Amazon Cloudfront, http://aws.amazon.com/cloudfront/
[5] Edgecast, http://www.edgecast.com/
[6] Highwinds Network Group, http://www.highwinds.com/
[7] A. Biliris, C. Cranor, F. Douglis, M. Rabinovich, S. Sibal, O. Spatscheck, and W. Sturm, "CDN Brokering", Proceedings of the 6th International Workshop on Web Caching and Content Distribution, Boston, MA, June 2001.
[8] M. Day, B. Cain, G. Tomlinson and P. Rzewski, A Model for Content Internetworking (CDI), Internet Engineering Task Force RFC 3466, February 2003. www.ietf.org/rfc/rfc3466.txt
[9] A. Barbir, B. Cain, F. Douglis, M. Green, M. Hofmann, R. Nair, D. Potter and O. Spatscheck, Known Content Network (CN) Request-Routing Mechanisms, May 2002. www.ietf.org/rfc/rfc3568.txt
[10] P. Rzewski, M. Day and D. Gilletti, Content Internetworking (CDI) Scenarios, RFC 3570, July 2003. www.ietf.org/rfc/rfc3570.txt

## Claims

1. System for Content Distribution Internetworking, comprising:
- a plurality of Content Delivery Networks, CDN, each defining an operating business (OBᵢ) having its respective local origin server (OSᵢ), said defined operating business (OBᵢ) being an arbitrary geographic area; and
- computing means for performing the interconnection of said plurality of CDNs, wherein:
- said computing means comprises of a global origin server, (OS_{G}), configured to coordinate. the formation of a global network by connecting to some or all of the said local origin servers (OSᵢ) in each of the said operating business (OBᵢ)s; and
- said global origin server (OS_{G}), is configured to maintain meta-data of the buckets that are in each of said local origin server (OSᵢ) in the plurality of CDNs, said buckets being logical containers holding CDN content,
so in case a requested content is not in said local origin server (OSᵢ) the location of said requested content is determined from said global origin server (OS_{G}), and
wherein the system is adapted and configured to implement the method of claim 15.

2. A system as per claim 1, wherein said global origin server (OS_{G}) is connected to each of the said local origin servers (OSᵢ) in each of the said operating business (OBᵢ) by keeping an open TCP connection with each of said local origin servers (OSᵢ).

3. A system as per claims 1 2, comprising a single top-level domain, TLD, server common to all the operating businesses (OBs).

4. A system as per claim 3, wherein said TLD server is deployed in one of the said operating businesses (OB₀).

5. A system as per any of the previous claims, wherein said global origin server (OS_{G}) is deployed in one of the said operating businesses (OB₀).

6. A system as per any of the previous claims, wherein said global origin server (OS_{G}) is in charge of returning a list of IP addresses of one or more local origin servers (OS_{{f}} that have the specific content requested by the local origin server, OSᵢ.

7. A system as per claim 6, where said requesting local origin server (OSᵢ) connects to one of the local origin servers from the list of origin servers (OS_{{f}}), and downloads the requested content.

8. A system as per any of the previous claims, wherein said global origin server (OS_{G}) comprises a connection module having a connection manager that is responsible for maintaining an open TCP connection with each of the local origin servers (OSᵢ) in each of said operating business (OBᵢ)..

9. A system as per claim 8 when depending on claim 6, wherein said connection module of said global origin server (OS_{G}) is responsible for processing a message received from a local origin server (OSᵢ) requesting a specific content, and returning in response to the same local origin server (OSᵢ), a message that includes a list of IP addresses of one or more origin servers (OS_{{j}}) that have the requested content.

10. A system as per claim 9, where said global origin server (OS_{G}) comprises a bucket module having a bucket manager that gets a list of all the buckets and files in the buckets from each of the local origin servers (OSᵢ), and is responsible for identifying the list of local origin servers (OS_{{j}}) that have the requested content.

11. A system as per claim 10, wherein said global origin server (OS_{G}) comprises a neighbourhood module having a neighbourhood manager with information about each of the local origin servers (OSᵢ) in each of the said operating business (OBᵢ) that also processes statistics information received from each of the origin servers and first identifies the list of local origin servers (OS_{{j}}) that can serve the requested content, and the creates and returns an ordered list from the least loaded to the most loaded origin server, of the said one or more local origin servers (OS_{{j}}) that can serve the requested content.

12. A system as per any of the previous claims, where each of said local origin servers (OSᵢ) in each of the said operating business (OBᵢ) comprises of a connection module with a connection manager that manages the connection between the local origin servers (OSᵢ) in each of the said operating business (OBᵢ).and the global origin server (OS_{G}), for sending and receiving messages, for processing the received messages, and for re-establishing a said connection in case it is closed.

13. A system as per claim 12, where each of the said local origin servers (OSᵢ) in each of the said operating business (OBᵢ) comprises of a statistics module that maintains system level statistics between two reporting periods.

14. A system as per claim 12 or 13, where each of said local origin servers (OSᵢ) in each of the said operating business (OBᵢ) comprises a bucket module with a bucket manager that keeps a list of all the buckets and files in each of the buckets and sends any bucket updates between two reporting periods to the global origin server (OS_{G}).

15. A method for Content Distribution Internetworking, comprising performing the interconnection of a plurality of Content Delivery Networks, CDNs, each defining an operating business (OBᵢ) having its own local origin server (OSᵢ), said defined operating business (OBᵢ) being an arbitrary geographic area, wherein the method comprises, in order to perform said interconnection:
- using a global origin server (OS_{G}) for coordinating the formation of a global network by connecting said global origin server (OS_{G}) to some or all of said local origin servers (OSᵢ) in each of the said operating business (OBᵢ);
- maintaining at said global origin server (OS_{G}) meta-data of the buckets that are in each local origin server (OSᵢ) in the plurality of CDNs, said buckets being logical containers holding CDN content; and
- in case a requested content is not in said local origin server (OSᵢ) a request to said global origin server (OS_{G}) is done to recover said content,
wherein the method further comprises:
- an end user requesting a specific content from an end point in one of said operating business (OBᵢ);
- the said end point receiving said content request from the said end user;
- the said end point in said operating business (OBᵢ) sending the content request to the local origin server (OSᵢ) in the said operating business (OBᵢ);
- the local origin server (OSᵢ) receiving said content request from said end point in the said operating business (OBᵢ);
- the said local origin server (OSᵢ), checking if it has the requested content, and if it does not, sending the content request to the said global origin server (OS_{G});
- the global origin server (OS_{G}) identifying one or more local origin servers (OS_{{f}}) that have the requested content, according to the meta-data of the buckets maintained in the global origin server and creating an ordered list with their IP addresses starting with the least loaded origin server and sending said list of origin servers (OS_{{j}}) to the local origin server (OSᵢ) that requested the content;
- the local origin server (OSᵢ) that does not have the requested content, selecting from said list:
- if only one local origin server (OS_{{f}}) address is in the list, the address of said one local origin server (OSⱼ); or
- if more than one local origin server (OS_{{j}}) address is in the list, the address of the least loaded local origin server (OSⱼ),
- the local origin server (OSᵢ) that does not have the requested content connecting to the selected local origin server (OSⱼ), and downloading the requested content;
- the local origin server (OSᵢ) that has downloaded the requested content, forwarding the downloaded content to the requesting end point; and
- the end point sending the content to the requesting end user.

16. A method as per claim 15, comprising a local origin server (OSᵢ) coming online:
- said local origin server (OSᵢ) establishing a TCP connection with said global origin server (OS_{G});
- the global origin server (OS_{G}) sending to the local origin server (OSᵢ), through said TCP connection, a message requesting information about its buckets; and
- the local origin server (OSᵢ), sending to the global origin server (OS_{G}), said required information in the form of a list of all buckets and files in each of the buckets at the local origin server (OSᵢ).

17. A method as per claim 15, comprising, said global origin server (OS_{G}) communicating periodically, with each of the local origin servers (OSᵢ), to:
- get a list of buckets and files in the buckets from each of the local origin servers (OSᵢ);
- get updates to any of the files and buckets in each of the local origin servers (OSᵢ); and
- get statistical info on the status of each of the local origin servers (OSᵢ).

## Patentansprüche

1. System für Netzwerkzusammenarbeit zur Inhaltsverteilung, umfassend:
- eine Vielzahl von Inhaltsbereitstellungsnetzen, CDN, die jeweils eine Betriebseinrichtung (OBᵢ) mit ihrem jeweiligen lokalen Ursprungsserver (OSᵢ) definieren, wobei die genannte Betriebseinrichtung (OBᵢ) ein beliebiges geographisches Gebiet ist; und
- Rechnermittel zum Ausführen der Interkonnektion der genannten Vielzahl von CDN, wobei
die genannten Rechnermittel einen globalen Ursprungsserver (OS_{G}) umfassen, der dazu konzipiert ist, durch Verbindung mit einigen oder allen der genannten lokalen Ursprungsserver (OSi) in jeder der genannten Betriebseinrichtungen (OBᵢ) die Bildung eines globalen Netzwerks zu koordinieren; und
- der genannte globale Ursprungsserver (OS_{G}) dazu konzipiert ist, Metadaten der Speicherbereiche auf jedem der genannten lokalen Ursprungsserver (OSᵢ) in der Vielzahl der CDN zu unterhalten, wobei die genannten Speicherbereiche logische Speicherbehälter mit CDN-Inhalt sind,
sodass, falls sich ein angeforderter Inhalt nicht auf dem genannten lokalen Ursprungsserver (OSᵢ) befindet, der Speicherort des genannten angeforderten Inhalts von dem genannten globalen Ursprungsserver (OS_{G}) ermittelt wird, und
wobei das System zur Implementierung des Verfahrens nach Anspruch 15 geeignet und ausgestaltet ist.

2. System nach Anspruch 1, wobei der genannte globale Ursprungsserver (OS_{G}) durch den Unterhalt einer offenen TCP-Verbindung zu den genannten lokalen Ursprungsservern (OSᵢ) mit jedem der genannten lokalen Ursprungsserver (OSᵢ) in jeder der genannten Betriebseinrichtungen (OBᵢ) verbunden ist.

3. System nach Anspruch 1 und 2, umfassend eine zentrale Top-Level-Domain, TLD, als Server, der allen Betriebseinrichtungen (OBs) gemein ist.

4. System nach Anspruch 3, wobei der genannte TLD-Server in einer der genannten Betriebseinrichtungen (OB₀) bereitsteht.

5. System nach einem der vorstehenden Ansprüche, wobei der genannte globale Ursprungsserver (OS_{G}) in einer der genannten Betriebseinrichtungen (OB₀) bereitsteht.

6. System nach einem der vorstehenden Ansprüche, wobei der genannte globale Ursprungsserver (OS_{G}) die Aufgabe hat, eine Liste von IP-Adressen eines oder mehrerer lokaler Ursprungsserver (OS_{{j}}) mit dem von dem lokalen Ursprungsserver, OS_{i,} geforderten Inhalt zurückzusenden.

7. System nach Anspruch 6, wobei sich der genannte anfordernde lokale Ursprungsserver (OSᵢ) mit einem der lokalen Ursprungsserver aus der Liste der Ursprungsserver (OS_{{j}}) verbindet und den angeforderten Inhalt herunterlädt.

8. System nach einem der vorstehenden Ansprüche, wobei der genannte globale Ursprungsserver (OS_{G}) ein Verbindungsmodul mit einem Verbindungsmanager umfasst, der für den Unterhalt einer offenen TCP-Verbindung mit jedem der lokalen Ursprungsserver(OSᵢ) in jeder der genannten Betriebseinrichtungen (OBᵢ) zuständig ist.

9. System nach Anspruch 8, wenn abhängig von Anspruch 6, wobei das genannte Verbindungsmodul des genannten globalen Ursprungsservers (OS_{G}) die Aufgabe hat, eine von einem lokalen Ursprungsserver (OSi) empfangene Nachricht zur Anforderung eines spezifischen Inhalts zu verarbeiten und als Reaktion darauf eine Nachricht, die eine Liste von IP-Adressen eines oder mehrerer Ursprungsserver (OS_{{j}}) mit dem angeforderten Inhalt enthält, an denselben lokalen Ursprungsserver (OSi) zurückzusenden.

10. System nach Anspruch 9, wobei der genannte globale Ursprungsserver (OS_{G}) ein Speicherbereichsmodul mit einem Speicherbereichsmanager umfasst, der von jedem der lokalen Ursprungsserver (OSi) eine Liste aller Speicherbereiche und Dateien in den Speicherbereichen erhält und die Aufgabe hat, die Liste der lokalen Ursprungsserver (OS_{{j}}), die den angeforderten Inhalt enthalten, zu ermitteln.

11. System nach Anspruch 10, wobei der genannte globale Ursprungsserver (OS_{G}) ein Nachbarschaftsmodul mit einem Nachbarschaftsmanager mit Informationen über jeden der lokalen Ursprungsserver (OSᵢ) in jeder der genannten Betriebseinrichtungen (OBᵢ) umfasst, der auch von jedem der Ursprungsserver empfangene Statistikinformationen verarbeitet und zuerst die Liste der lokalen Ursprungsserver (OS_{{j}}), die den angeforderten Inhalt liefern können, ermittelt und dann eine geordnete Liste von dem am wenigsten belasteten zu dem am stärksten belasteten Ursprungsserver der genannten einen oder mehreren lokalen Ursprungsserver (OS_{{j}}), die den angeforderten Inhalt liefern können, erstellt und zurücksendet.

12. System nach einem der vorstehenden Ansprüche, wobei jeder der genannten lokalen Ursprungsserver (OSᵢ) in jeder der genannten Betriebseinrichtungen (OBᵢ) ein Verbindungsmodul mit einem Verbindungsmanager umfasst, der die Verbindung zwischen den lokalen Ursprungsservern (OSᵢ) in jeder der genannten Betriebseinrichtungen (OBᵢ) und dem globalen Ursprungsserver (OS_{G}) zum Senden und Empfangen von Nachrichten, zum Verarbeiten der empfangenen Nachrichten und zum Wiederherstellen einer genannten Verbindung, falls diese geschlossen ist, verwaltet.

13. System nach Anspruch 12, wobei jeder der genannten lokalen Ursprungsserver (OSᵢ) in jeder der genannten Betriebseinrichtungen (OBᵢ) ein Statistikmodul umfasst, das Statistiken auf Systemebene zwischen zwei Berichtszeiträumen führt.

14. System nach Anspruch 12 oder 13, wobei jeder der genannten lokalen Ursprungsserver (OSᵢ) in jeder der genannten Betriebseinrichtungen (OBi) ein Speicherbereichsmodul mit einem Speicherbereichsmanager umfasst, der eine Liste aller Speicherbereiche und Dateien in den einzelnen Speicherbereichen führt und alle Speicherbereichsaktualisierungen zwischen zwei Berichtszeiträumen an den globalen Ursprungsserver (OS_{G}) sendet.

15. Verfahren für Netzwerkzusammenarbeit zur Inhaltsverteilung umfassend die Durchführung der Interkonnektion einer Vielzahl von Inhaltsbereitstellungsnetzen, CDN, die jeweils eine Betriebseinrichtung (OBᵢ) mit ihrem eigenen lokalen Ursprungsserver (OSᵢ) definieren, wobei die genannte Betriebseinrichtung (OBᵢ) ein beliebiges geographisches Gebiet ist, wobei das Verfahren zur Durchführung der genannten Interkonnektion Folgendes umfasst:
- Verwenden eines globalen Ursprungsservers (OS_{G}) zur Koordinierung der Bildung eines globalen Netzwerks durch Verbinden des genannten globalen Ursprungsservers (OS_{G}) mit einigen oder allen der genannten lokalen Ursprungsserver (OSᵢ) in jeder der genannten Betriebseinrichtungen (OBᵢ);
- Unterhalten von Metadaten der Speicherbereiche auf jedem der lokalen Ursprungsserver (OSᵢ) in der Vielzahl der CDN auf dem genannten globalen Ursprungsserver (OS_{G}), wobei die genannten Speicherbereiche logische Speicherbehälter mit CDN-Inhalt sind; und
- falls sich ein angeforderter Inhalt nicht auf dem genannten lokalen Ursprungsserver (OSᵢ) befindet, Anforderung zur Wiederherstellung des genannten Inhalts an den genannten globalen Ursprungsserver (OS_{G}),
wobei das Verfahren ferner umfasst:
- Anfordern eines spezifischen Inhalts durch einen Endbenutzer an einem Endpunkt in einer der genannten Betriebseinrichtungen (OBᵢ);
- Empfangen der genannten Inhaltsanforderung des genannten Endbenutzers durch den genannten Endpunkt,
- Senden der Inhaltsanforderung an den lokalen Ursprungsserver (OSᵢ) in der genannten Betriebseinrichtung (OBᵢ) durch den genannten Endpunkt in der genannten Betriebseinrichtung (OBᵢ);
- Empfangen der genannten Inhaltsanforderung von dem genannten Endpunkt in der genannten Betriebseinrichtung (OBᵢ) durch den lokalen Ursprungsserver (OSᵢ);
- Überprüfen durch den genannten lokalen Ursprungsserver (OSᵢ), ob er den angeforderten Inhalt enthält, und falls nicht, Senden der Inhaltsanforderung an den genannten globalen Ursprungsserver (OS_{G});
- Ermitteln eines oder mehrerer lokaler Ursprungsserver (OS_{{j}}) mit dem angeforderten Inhalt durch den globalen Ursprungsserver (OS_{G}), entsprechend den Megadaten der auf dem globalen Ursprungsserver unterhaltenen Speicherbereiche, und Erstellen einer geordneten Liste mit deren IP-Adressen, beginnend mit dem am wenigsten belasteten Ursprungsserver, sowie Senden der genannten Liste von Ursprungsservern (OS_{{j}}) an den lokalen Ursprungsserver (OSᵢ), der den Inhalt angefordert hat;
- Auswählen durch den lokalen Ursprungsserver (OSᵢ), der den angeforderten Inhalt nicht enthält, aus der genannten Liste:
- wenn nur eine Adresse eines lokalen Ursprungsservers (OS_{{j}}) auf der Liste ist, die Adresse des genannten lokalen Ursprungsservers (OSᵢ); oder
- wenn mehr als eine Adresse lokaler Ursprungsserver (OS_{{j}}) auf der Liste sind, die Adresse des am wenigsten belasteten lokalen Ursprungsservers (OSᵢ),
- Verbinden des lokalen Ursprungsservers (OSᵢ), der den angeforderten Inhalt nicht enthält, mit dem ausgewählten lokalen Ursprungsserver (OSᵢ) und Herunterladen des angeforderten Inhalts;
- Weiterleiten des heruntergeladenen Inhalts durch den lokalen Ursprungsserver (OSᵢ) der den angeforderten Inhalt heruntergeladen hat, an den anfordernden Endpunkt; und
- Senden des Inhalts durch den Endpunkt an den anfordernden Endbenutzer.

16. Verfahren nach Anspruch 15, umfassend einen lokalen Ursprungsserver (OSᵢ), der online geht:
- wobei der genannte lokale Ursprungsserver (OSᵢ) eine TCP-Verbindung mit dem genannten globalen Ursprungsserver (OS_{G}) herstellt;
- wobei der globale Ursprungsserver (OS_{G}) über die genannte TCP-Verbindung eine Nachricht an den lokalen Ursprungsserver (OSᵢ) zum Anfordern von Informationen über seine Speicherbereiche sendet; und
- wobei der lokale Ursprungsserver (OSᵢ) die genannten verlangten Information in Form einer Liste aller Speicherbereiche und Dateien in den einzelnen Speicherbereichen auf dem lokalen Ursprungsserver (OSᵢ) an den globalen Ursprungsserver (OS_{G}) sendet.

17. Verfahren nach Anspruch 15, umfassend die periodische Kommunikation des genannten globalen Ursprungsservers (OS_{G}) mit jedem der lokalen Ursprungsserver (OSᵢ), um:
- eine Liste von Speicherbereichen und Dateien in den Speicherbereichen von den lokalen Ursprungsservern (OSᵢ) zu erhalten;
- Aktualisierungen zu allen Dateien und Speicherbereichen auf den jedem der lokalen Ursprungsserver (OSᵢ) zu erhalten; und
- statistische Informationen über den Status jedes der lokalen Ursprungsserver (OSᵢ) zu erhalten.

## Revendications

1. Système et procédé d'interconnexion de réseaux de distribution de contenus, comprenant :
- une pluralité de Réseaux de diffusion de contenu, RDC, chacun définissant une activité opérationnelle (OBᵢ) ayant son serveur d'origine locale respectif (OSᵢ), ladite activité opérationnelle définie (OBᵢ) étant une zone géographique arbitraire ; et
- des moyens de calcul pour réaliser l'interconnexion de ladite pluralité de RDC, dans lesquels
- ledit moyen de calcul comprend un Serveur d'origine global, (OS_{G}), configuré pour coordonner
la formation d'un réseau mondial en se connectant à tout ou partie desdits serveurs d'origine locale (OSᵢ) dans chacune desdites activités opérationnelles (OBᵢ) ; et
- ledit serveur d'origine global (OS_{G}), est configuré pour maintenir des métadonnées des seaux qui se trouvent dans chacun desdits serveurs d'origine local (OSᵢ) dans la pluralité de RDC, lesdits seaux étant des conteneurs logiques contenant un contenu RDC,
de sorte que dans le cas où un contenu demandé n'est pas dans ledit serveur d'origine local (OSᵢ), l'emplacement dudit contenu demandé est déterminé à partir dudit serveur d'origine global (OS_{G}), et
dans lequel le système est adapté et configuré pour mettre en oeuvre le procédé selon la revendication 15.

2. Système selon la revendication 1, dans lequel ledit serveur d'origine global (OS_{G}) est connecté à chacun desdits serveurs d'origine locaux (OSᵢ) dans chacune desdites activités d'exploitation (OBᵢ) en maintenant une connexion TCP ouverte avec chacun desdits serveurs d'origine locaux (OSᵢ).

3. Système selon les revendications 1 ou 2, comprenant un seul serveur de domaine de premier niveau, TLD, commun à toutes les activités d'exploitation (OBs).

4. Système selon la revendication 3, dans lequel ledit serveur TLD est déployé dans l'une desdites activités opérationnelles (OBₒ).

5. Système selon l'une quelconque des revendications précédentes, dans lequel ledit serveur d'origine global (OS_{G}) est déployé dans l'une desdites activités opérationnelles (OB₀).

6. Système selon l'une quelconque des revendications précédentes, dans lequel ledit serveur d'origine global (OS_{G}) est chargé de renvoyer une liste d'adresses IP d'un ou plusieurs serveurs d'origine locale (OS_{{j}}) ayant le contenu spécifique demandé par le serveur d'origine locale, OSᵢ.

7. Un système selon la revendication 6, où ledit serveur d'origine local demandeur (OSᵢ) se connecte à l'un des serveurs d'origine locaux de la liste des serveurs d'origine (OS_{{j}}), et télécharge le contenu demandé.

8. Système selon l'une quelconque des revendications précédentes, dans lequel ledit serveur d'origine global (OS_{G}) comprend un module de connexion ayant un gestionnaire de connexion qui est responsable du maintien d'une connexion TCP ouverte avec chacun des serveurs d'origine local (OSᵢ) dans chacune desdites activités opérationnelles (OBᵢ).

9. Système selon la revendication 8 lorsqu'il dépend de la revendication 6, dans lequel ledit module de connexion dudit serveur d'origine global (OS_{G}) est responsable du traitement d'un message reçu d'un serveur d'origine local (OSᵢ) demandant un contenu spécifique, et renvoyant en réponse au même serveur d'origine local (OSᵢ), un message qui inclut une liste des adresses IP d'un ou plusieurs serveurs d'origine (OS{j}) ayant le contenu demandé.

10. Système selon la revendication 9, dans lequel ledit serveur d'origine global (OS_{G}) comprend un module de seau ayant un gestionnaire de seau qui obtient une liste de tous les seau et fichiers dans les seau depuis chacun des serveurs d'origine locaux (OSᵢ), et est responsable d'identifier la liste des serveurs d'origine locaux (OS_{{j}}) ayant le contenu requis.

11. Système selon la revendication 10, dans lequel ledit serveur d'origine global (OS_{G}) comprend un module de voisinage ayant un gestionnaire de voisinage avec des informations sur chacun des serveurs d'origine locaux (OSᵢ) dans chacune desdites activités d'exploitation (OBᵢ) qui traite également des informations statistiques reçues de chacun des serveurs d'origine et identifie d'abord la liste des serveurs d'origine locaux (OS_{{j}}) qui peuvent servir le contenu demandé, et crée et renvoie une liste ordonnée du moins chargé vers le plus chargé de ces serveurs, des un ou plusieurs desdits un serveur locaux (OS{j}) qui peut servir le contenu demandé.

12. Système selon l'une quelconque des revendications précédentes, dans lequel chacun desdits serveurs d'origine locale (OSᵢ) dans chacune desdites activités d'exploitation (OBᵢ) comprend un module de connexion avec un gestionnaire de connexion qui gère la connexion entre les serveurs d'origine locale (OSᵢ) dans chacune desdites activités d'exploitation (OBᵢ) et le serveur d'origine globale (OS_{G}), pour envoyer et recevoir des messages, traiter les messages reçus et rétablir une dite connexion lorsqu'elle est fermée.

13. Système selon la revendication 12, dans lequel chacun desdits serveurs d'origine locale (OSᵢ) dans chacune desdites activités d'exploitation (OBᵢ) comprend un module statistique qui maintient des statistiques au niveau du système entre deux périodes informatifs.

14. Système selon la revendication 12 ou 13, dans lequel chacun desdits serveurs d'origine locale (OSᵢ) dans chacune desdites activités d'exploitation (OBᵢ) comprend un module de seau avec un gestionnaire de seau qui conserve une liste de tous les seau et fichiers dans chacun des seau et envoie toute mise à jour de seau entre deux périodes de rapport au serveur d'origine global (OS_{G}).

15. Procédé de mise en réseau Internet de distribution de contenu, comprenant la réalisation de l'interconnexion d'une pluralité de réseaux de distribution de contenu, RDC, chacun définissant une entreprise d'exploitation (OBᵢ) ayant son propre serveur d'origine locale (OSᵢ), ladite entreprise d'exploitation définie (OBᵢ) étant une zone géographique arbitraire, où le procédé comprend, afin de réaliser ladite interconnexion :
- utilisant un serveur d'origine global (OS_{G}) pour coordonner la formation d'un réseau global en connectant ledit serveur d'origine global (OS_{G}) à tout ou partie desdits serveurs d'origine locaux (OSᵢ) dans chacune desdites activités opérationnelles (OBᵢ);
- maintenant au niveau dudit serveur d'origine global (OS_{G} de métadonnées des seaux qui se trouvent dans chaque serveur d'origine local (OSᵢ dans la pluralité de RDC, lesdits seaux étant des conteneurs logiques contenant du contenu RDC ; et
- dans le cas où un contenu demandé n'est pas dans ledit serveur d'origine local (OSᵢ) effectuant une requête audit serveur d'origine global (OS_{G}) pour récupérer ledit contenu,
dans laquelle le procédé comprend en outre :
- un utilisateur final demandant un contenu spécifique à partir d'un point final de l'une desdites activités d'exploitation (OBᵢ);
- ledit point final recevant ladite demande de contenu dudit utilisateur final ; ledit point final dans ladite entreprise d'exploitation (OBᵢ) envoyant la demande de contenu au serveur d'origine local (OSᵢ) dans ladite entreprise d'exploitation (OBᵢ);
- le serveur d'origine local (OSᵢ) recevant ladite requête de contenu à partir dudit point final dans ladite entreprise d'exploitation (OBᵢ);
- ledit serveur d'origine local (OSᵢ), vérifiant s'il a le contenu demandé et, dans le cas contraire, envoyant la demande de contenu audit serveur d'origine global (OS_{G});
- le serveur d'origine global (OS_{G}) identifiant un ou plusieurs serveurs d'origine locaux (OS_{{j}}) qui ont le contenu demandé, selon les méta-données des seaux maintenus dans le serveur d'origine global et créant une liste ordonnée avec leurs adresses IP commençant par le serveur d'origine le moins chargé et envoyant ladite liste des serveurs d'origine (OS_{{j}}) au serveur d'origine local (OSᵢ) qui avait demandé le contenu ;
- le serveur d'origine local (OSᵢ) qui n'a pas le contenu demandé, en sélectionnant dans ladite liste :
- si une seule adresse de serveur d'origine local (OS_{{j}}) figure dans la liste, l'adresse dudit serveur d'origine local (OSᵢ); ou
- si plus d'une adresse de serveur d'origine local (OS_{{j}}) est dans la liste, l'adresse du serveur d'origine local le moins chargé (OSᵢ),
- le serveur d'origine local (OSᵢ) qui n'a pas le contenu demandé se connecte au serveur d'origine local sélectionné (OSᵢ), et télécharge le contenu demandé;
- le serveur d'origine local (OSᵢ) qui a téléchargé le contenu demandé, transférant le contenu téléchargé au point final demandeur ; et
- le point final qui envoie le contenu à l'utilisateur final demandeur.

16. Procédé selon la revendication 15, comprenant un serveur d'origine locale (OSᵢ) venant en ligne :
- ledit serveur d'origine local (OSᵢ) établissant une connexion TCP avec ledit serveur d'origine global (OS_{G});
- le serveur d'origine global (OS_{G}) envoyant au serveur d'origine local (OSᵢ), via ladite connexion TCP, un message demandant des informations sur ses seaux ; et
- le serveur d'origine local (OSᵢ), envoyant au serveur d'origine global (OS_{G}), lesdites informations requises sous la forme d'une liste de tous les seaux et fichiers dans chacun des éléments suivants (OSᵢ).

17. Procédé selon la revendication 15, comprenant, ledit serveur d'origine global (OS_{G}) communiquant périodiquement, avec chacun des serveurs d'origine locaux (OSᵢ), à :
- obtenir une liste des seaux et des fichiers dans les seaux à partir de chacun des serveurs locaux d'origine (OSᵢ);
- obtenir les mises à jour de tous les fichiers et seaux de chacun des serveurs d'origine locale (OSᵢ); et
- obtenir des informations statistiques sur l'état de chacun des serveurs d'origine locale (OSᵢ).
